(19) Europäisches Patentamt / European Patent Office / Office européen des brevets

(11) **EP 4 459 929 A1**

(12) # EUROPEAN PATENT APPLICATION
published in accordance with Art. 153(4) EPC

(43) Date of publication:
**06.11.2024  Bulletin 2024/45**

(21) Application number: **22914997.6**

(22) Date of filing: **29.12.2022**

(51) International Patent Classification (IPC):
**H04L 12/00** (2006.01)

(52) Cooperative Patent Classification (CPC):
**G06F 18/214; G06N 20/00; H04L 12/00**

(86) International application number:
**PCT/CN2022/143132**

(87) International publication number:
**WO 2023/125747 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021  CN 202111670001**

(71) Applicant: **Vivo Mobile Communication Co., Ltd.
Dongguan, Guangdong 523863 (CN)**

(72) Inventor: **CHONG, Weiwei
Dongguan, Guangdong 523863 (CN)**

(74) Representative: **Conti, Marco
Bugnion S.p.A.
Via di Corticella, 87
40128 Bologna (IT)**

(54) **MODEL TRAINING METHOD AND APPARATUS, AND COMMUNICATION DEVICE**

(57)    This application relates to the field of communication technologies, and discloses a model training method and apparatus and a communication device. The model training method in embodiments of this application includes: A first network element sends a federated model training request message to at least one second network element when performing a federated model training process corresponding to a model training task, where the at least one second network element is a network element participating in the federated model training process. The first network element receives first information sent by the at least one second network element, where the first information includes at least first model training intermediate data, the first model training intermediate data corresponds to samples used for federated model training in the second network element, and the samples used for federated model training in the second network elements are the same but sample features are different. The first network element performs model training based on the first model training intermediate data reported by the at least one second network element to obtain a target model and/or second model training intermediate data.

300

S310

A first network element sends a federated model training request message to at least one second network element when performing a federated model training process corresponding to a model training task

S320

The first network element receives first information sent by the at least one second network element

S330

The first network element performs model training based on first model training intermediate data reported by the at least one second network element to obtain a target model and/or second model training intermediate data

FIG. 3

Processed by Luminess, 75001 PARIS (FR)

EP 4 459 929 A1

**Description**

**CROSS-REFERENCE TO RELATED APPLICATIONS**

This application claims priority to Chinese Patent Application No. 202111670001.3 filed on December 30, 2021, which is incorporated herein by reference in its entirety.

**TECHNICAL FIELD**

This application relates to the field of communication technologies, and more specifically, to a model training method and apparatus and a communication device.

**BACKGROUND**

With the rapid development of artificial intelligence (Artificial Intelligence, AI), AI has been widely applied in various fields.

The communication field is used as an example. With the introduction of AI functions, there are inevitable requirements for machine learning. For example, for an intelligence network service, a large amount of data generated on different domains, different network elements, and the like are required for model training, to implement more accurate service implementation. However, as data security and privacy issues draw increasing attention, a data isolation problem exists between different domains, different network elements, and the like in a network. Therefore, how to implement model training based on data on different domains and different network elements becomes an urgent problem that needs to resolved currently.

**SUMMARY**

Embodiments of this application provide a model training method and apparatus and a communication device, which can unite data located on different domains and different network elements to implement model training without data sharing.

According to a first aspect, a model training method is provided, including: A first network element sends a federated model training request message to at least one second network element when performing a federated model training process corresponding to a model training task, where the at least one second network element is a network element participating in the federated model training process. The first network element receives first information sent by the at least one second network element, where the first information includes at least first model training intermediate data, the first model training intermediate data corresponds to samples used for federated model training in the second network element, and the samples used for federated model training in the second network elements are the same but sample features are different. The first network element performs model training based on the first model training intermediate data reported by the at least one second network element to obtain a target model and/or second model training intermediate data.

According to a second aspect, a model training method is provided. The method includes: A second network element receives a federated model training request message sent by a first network element, where the federated model training request message is used for requesting the second network element to participate in a federated model training process corresponding to a model training task. The second network element performs model training based on the federated model training request message to obtain first model training intermediate data. The second network element sends first information to the first network element, where the first information includes at least the first model training intermediate data. The first model training intermediate data corresponds to samples used for federated model training in the second network element. The samples used for the federated model training in the second network element and samples used for the federated model training in a fourth network element are the same but sample features are different. The fourth network element is another network element than the second network element in a plurality of network elements participating in the federated model training process.

According to a third aspect, a model training method is provided. The method includes: A third network element receives related information of a target model sent by a first network element. The related information of the target model at least represents a vertical federated model of the target model.

According to a fourth aspect, a model training apparatus is provided, including: a first sending module, configured to send a federated model training request message to at least one second network element when performing a federated model training process corresponding to a model training task, where the at least one second network element is a network element participating in the federated model training process; a first receiving module, configured to receive first information sent by the at least one second network element, where the first information includes at least first model training intermediate data, the first model training intermediate data corresponds to samples used for federated model training in the second network element, and the samples used for federated model training in the second network elements are the same but sample features are different; and a first training module, configured to perform model training based on the first model training intermediate data reported by the at least one second network element to obtain a target model and/or second model training intermediate data.

According to a fifth aspect, a model training apparatus is provided. The apparatus includes: a second receiving module, configured to receive a federated model training request message sent by a first network element, where the federated model training request message is used for requesting a second network element to participate in a federated model training process corresponding to a model training task; a second training module, configured to perform model training based on the federated model training request message to obtain first model training intermediate data; and a second sending module, configured to send first information to the first network element, where the first information includes at least the first model training intermediate data. The first model training intermediate data corresponds to samples used for federated model training in the second network element. The samples used for the federated model training in the second network element and samples used for the federated model training in a fourth network element are the same but sample features are different. The fourth network element is another network element than the second network element in a plurality of network elements participating in the federated model training process.

According to a sixth aspect, a model training apparatus is provided. The apparatus includes: a third receiving module, configured to receive related information of a target model sent by a first network element. The related information of the target model at least represents a vertical federated model of the target model.

According to a seventh aspect, a communication device is provided. The communication device includes a processor and a memory. The memory stores a program or instructions executable on the processor. The program or instructions, when being executed by the processor, implement the steps of the method according to the first aspect, the second aspect or the third aspect.

According to an eighth aspect, a communication device is provided, including a processor and a communication interface. The communication interface is coupled to the processor. The processor is configured to run a program or instructions to implement the steps of the method according to the first aspect, or implement the steps of the method according to the second aspect, or implement the steps of the method according to the third aspect.

According to a ninth aspect, a model training system is provided, including: a first network element, a second network element, and a third network element. The first network element may be configured to perform the steps of the model training method according to the first aspect. The second network element may be configured to perform the steps of the model training method according to the second aspect. The third network element may be configured to perform the steps of the model training method according to the third aspect.

According to a tenth aspect, a computer storage medium is provided. The computer storage medium stores a program or instructions. The program or instructions, when being executed by a processor implement the steps of the method according to the first aspect, or implement the steps of the method according to the second aspect, or implement the steps of the method according to the third aspect.

According to an eleventh aspect, a chip is provided. The chip includes a processor and a communication interface. The communication interface is coupled to the processor. The processor is configured to run a program or instructions to implement the steps of the method according to the first aspect, or implement the steps of the method according to the second aspect, or implement the steps of the method according to the third aspect.

According to a twelfth aspect, a computer program product/program product is provided. The computer program/program product is stored in a storage medium. The computer program/program product, when being executed by at least one processor, implements the steps of the method according to the first aspect, or implements the steps of the method according to the second aspect, or implements the steps of the method according to the third aspect.

In the embodiments of this application, a first network element uses a vertical federated model training manner to unite second network elements to implement local distributed model training. Therefore, data privacy and data security in the second network elements can be ensured without sharing data on the second network elements in a communication network, so that a model training effect can be further ensured.

## BRIEF DESCRIPTION OF THE DRAWINGS

FIG. 1 is a schematic structural diagram of a wireless communication system according to an example embodiment of this application;
FIG. 2 is a schematic structural diagram of a model training system according to an example embodiment of this application;
FIG. 3 is a schematic flowchart 1 of a model training method according to an embodiment of this application;

FIG. 4 is a schematic flowchart 2 of a model training method according to an embodiment of this application;

FIG. 5 is a schematic flowchart 3 of a model training method according to an embodiment of this application;

FIG. 6 is a schematic flowchart of interaction of a model training method according to an embodiment of this application;

FIG. 7 is a schematic flowchart 4 of a model training method according to an embodiment of this application;

FIG. 8 is a schematic flowchart 5 of a model training method according to an embodiment of this application;

FIG. 9 is a schematic structural diagram 1 of a model training apparatus according to an embodiment of this application;

FIG. 10 is a schematic structural diagram 2 of a model training apparatus according to an embodiment of this application;

FIG. 11 is a schematic structural diagram 3 of a model training apparatus according to an embodiment of this application;

FIG. 12 is a schematic structural diagram of a communication device according to an example embodiment of this application;

FIG. 13 is a schematic structural diagram of a terminal according to an example embodiment of this application;

FIG. 14 is a schematic structural diagram 1 of a network-side device according to an embodiment of this application; and

FIG. 15 is a schematic structural diagram 2 of a network-side device according to an embodiment of this application.

## DETAILED DESCRIPTION

The technical solutions in embodiments of this application are clearly described below with reference to the accompanying drawings in the embodiments of this application. Apparently, the described embodiments are some rather than all of the embodiments of this application. All other embodiments obtained by persons of ordinary skill in the art based on the embodiments of this application fall within the scope of protection of this application.

The specification and claims of this application, and terms "first" and "second" are used to distinguish similar objects, but are not used to describe a specific sequence or order. It should be understood that the terms so used are interchangeable, where appropriate, so that embodiments of this application can be implemented in an order other than those illustrated or described herein, and that the objects distinguished by "first" and "second" are generally of one type and do not limit the number of objects. For example, one or more first objects may be provided. In addition, "and/or" in the description and the claims means at least one of the connected objects. The character "/" in this specification generally indicates an "or" relationship between the associated objects.

It should be noted that the technologies described in the embodiments of this application are not limited to being used in a long term evolution (Long Term Evolution, LTE)/LTE-advanced (LTE-Advanced, LTE-A) system, and may further be used in another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application are often used interchangeably, and the described technologies may be used in the systems and radio technologies described above, and may be used in other systems and radio technologies. The following description describes a new radio (New Radio, NR) system as an example, and NR terms are used in most of the descriptions below. However, these technologies may also be applied to communication systems such as a 6th generation (6th Generation, 6G) communication system other than an NR system.

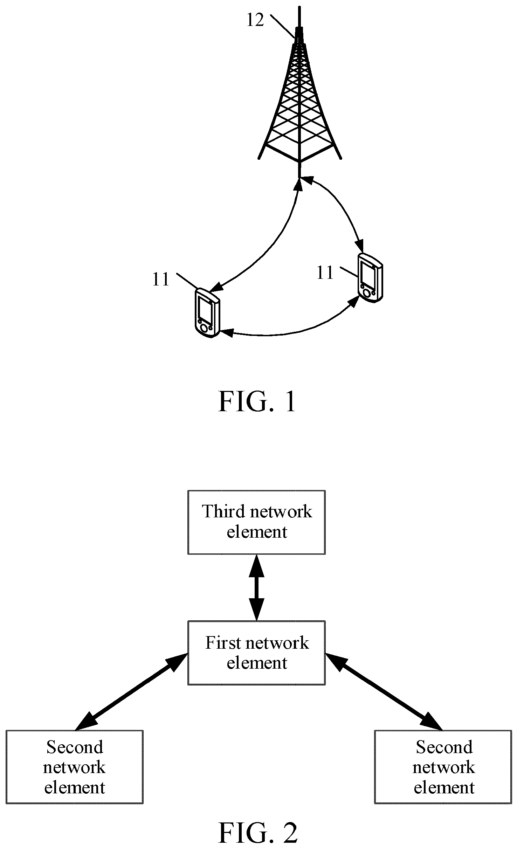

FIG. 1 is a block diagram of a wireless communication system to which embodiments of this application are applicable. The wireless communication system includes a terminal 11 and a network-side device 12. The terminal 11 may be a terminal-side device, for example, a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart home (home devices such as a refrigerator, a television, a washing machine, furniture, and the like with wireless communication functions), a video game console, a personal computer (personal computer, PC), or such as an automated teller machine, a self-service machine, or the like. The wearable device includes a smart watch, a smart band, smart earphones, smart glasses, smart jewelry (a smart bracelet, a smart hand bangle, a smart ring, a smart necklace, a smart ankle bangle, a smart anklet, or the like), a smart wristband, smart clothing, and the like. It is to be noted that, in the embodiments of this application, a specific type of the terminal 11 is not limited. The network-side device 12 may include an access network device or a core network device. The access network device 12 may also be referred to as a radio access network device, a radio access network (Radio Access Network, RAN), a radio access network function or a radio access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that the same technical effects are achieved, the base station is not limited to a specific technical term. It is to be noted that, in the embodiments of this application, only a base station in an NR system is used as an example for description, and a specific type of the base station is not limited.

Based on the foregoing wireless communication system, as shown in FIG. 2, the embodiments of this application further provide a schematic structural diagram of a model training system (or may be referred to as a vertical federated learning system or a vertical federated model training system). The model training system includes a first network element, a second network element, and a third network element.

The first network element is used as a coordinator (coordinator) in the model training system, and may be a network element or device that can provide a machine learning function in a communication network, for example, a network element or device such as a network data analytics function (Network Data Analytics Function, NWDAF), a management data analytics service (management data analytics service, MDAS), a management data analytics function (management data analytics function, MDAF), or the like that is specially configured to provide a network intelligence service. Alternatively, the first network element may be a network element or device that provides another communication-related service (for example, a mobility management (Mobility Management, MM) service, or a session management (Session Management, SM) service) and at the same time has an intelligence function, for example, an access and mobility management function (Access and Mobility Management Function, AMF), a session management function (Session Management Function, SMF), an application function (application function, AF), or the like. The AF may be an AF that is deployed by a communication operator, or may be a third-party AF.

The second network element is used as a training entity in the model training system, and may be a network element or device that has a local machine learning capability in the communication network, for example, an AI function network element in a radio access network (Radio Access Network, RAN) domain, an AI function network element in a core network (Core Network, CN) domain, a third-party AI application, an AI client (client) in UE, a local communication service device, or the like. It should be noted that, for ease of understanding, FIG. 2 only schematically shows two second network elements. In practice, one or more second network elements may be provided.

The third network element is used as a model consumer in the model training system, and may be a network element or device that needs to perform model consumption in the wireless communication system, for example, a third-party AI application, UE, a network-side device, or the like. It may be understood that, the model training system may include the third network element (for example, a federated model training process may be triggered by the third network element) as shown in FIG. 2 or may not include the third network element (for example, a federated model training process may be triggered by the first network element according to a requirement of the first network element or the like), or the like. That is, the model training system may include more or fewer network elements or devices than those shown in FIG. 2. This is not limited herein.

The technical solutions according to the embodiments of this application are described below in detail with reference to the accompanying drawings through some embodiments and application scenarios thereof.

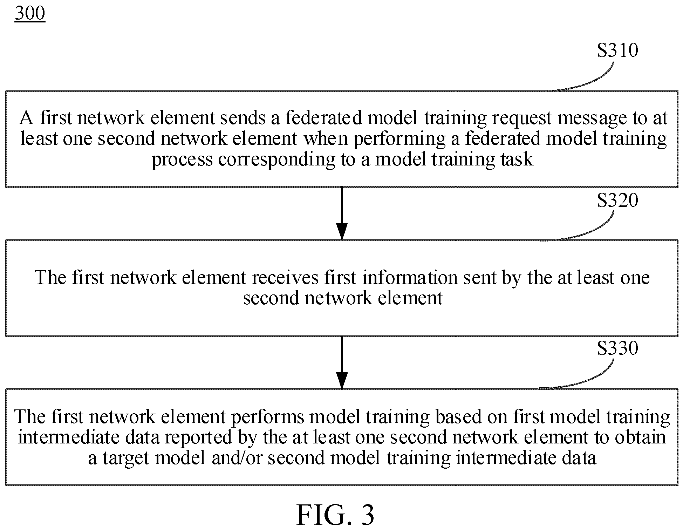

FIG. 3 is a schematic flowchart of a model training method 300 according to an example embodiment of this application. The method 300 may be performed by, but not limited to, a first network element (for example, a terminal or a network-side device), and may be specifically performed by hardware and/or software installed on the first network element. In this embodiment, the method 300 may include at least the following steps.

S310: The first network element sends a federated model training request message to at least one second network element when performing a federated model training process corresponding to a model training task.

The model training task may be an AI model training task corresponding to data analytics, or may be an AI model training task corresponding to communication robustness learning, or may be an AI model training task for performing model training on a movement trajectory of UE, or the like. This is not limited herein.

The federated model training process may be triggered by the first network element based on a model training task required by the first network element, or may be triggered by a third network element. For example, the third network element may send a model request message corresponding to a model training task to the first network element according to a requirement of the third network element, to trigger the federated model training process.

It is to be noted that, the federated model training process may be understood as a vertical federated learning process, is essentially the joint of sample features, and is applicable to a scenario with a large number of overlaps of users (that is, samples) and a small number of overlaps of features (that is, sample features). For example, a CN domain and a RAN domain in a communication network serve different services (for example, an MM service, an SM service, that is, different sample features) of a same user or user group (for example, UE or a UE group, that is, same samples).

Based on this, in this application, a joint model is used to train different sample features of a common sample of participants (that is, the second network elements) to increase the feature dimensionality of training data, to obtain a better model through training.

In this case, the federated model training request messages sent by the first network element to the second network elements are used for requesting the at least one second network element to participate in the federated model training process (that is, the at least one second network element is a network element participating in the federated model training process, and samples used for federated model training in the second network elements are the same but sample features are different), for example, perform local model training, to join the second network elements to implement local distributed model training without sharing original data (or training data) on the second network elements, so that while data privacy and data security in the second network elements are ensured, a model training effect is ensured.

Certainly, a second network element participating in the federated model training process may be determined in various manners. In an implementation, the second network element may be a network element that is obtained by the first network element from a network repository function (Network Repository Function, NRF) or unified data management entity (Unified Data Management, UDM) based on a model training task and can support the federated model training process. For example, the first network element searches the NRF for an AMF instance (instance(s)), a RAN instance(s), an AF instance(s), or the like participating in a current federated model training process. In another example, the first network element searches the UDM for a UE instance (instance(s)) or the like participating in a current federated model training process. This is not limited herein.

S320: The first network element receives first information sent by the at least one second network element.

It may be understood that, after receiving the federated model training request messages, the second network elements may perform model training based on the federated model training request messages to obtain first model training intermediate data, and send the first model training intermediate data to the first network element through the first information (that is, the first information includes at least the first model training intermediate data). When performing the model training based on the federated model training request message, the second network element may implement the model training based on a locally preconfigured initial model, or may implement the model training based on a local model that has been trained before the federated model training request message is received, or may implement the model training based on a model obtained by training the federated model training request message. This is not limited herein.

In addition, the first model training intermediate data corresponds to samples used for federated model training in the second network element, and the samples used for federated model training in the second network elements are the same but sample features are different. It should be noted that, one or more samples used for the federated model training may be provided in one second network element. Therefore, corresponding to the sample, one or more pieces of first model training intermediate data may be provided. For example, it is assumed that 10 samples used for the federated model training in the second network element are provided. Therefore, correspondingly 10 pieces of first model training intermediate data are provided.

S330: The first network element performs model training based on the first model training intermediate data reported by the at least one second network element to obtain a target model and/or second model training intermediate data.

A process in which the first network element performs the model training based on the first model training intermediate data is not limited herein. However, it is to be noted that, the first model training intermediate data reported by each second network element corresponds to at least some submodels of the target model. That is, each second network element may be trained separately for some submodels of the target model, the first model training intermediate data obtained through the training is reported to the first network element, and then the first network element performs the model training or the like on the pieces of first model training intermediate data, to obtain the target model.

For example, it is assumed that the target model includes a submodel A, a submodel B, and a submodel C. Therefore, a second network element A is responsible for training the submodel A to obtain first model training intermediate data A, a second network element B is responsible for training the submodel B to obtain first model training intermediate data B, and a second network element C is responsible for training the submodel C to obtain first model training intermediate data C. Therefore, the first network element then performs the model training on the received first model training intermediate data A, B, and C to obtain the target model.

In addition, the second model training intermediate data at least may include: a gradient of a loss function of the target model for a parameter of a local training model of the at least one second network element. The loss function of the target model may be configured by the first network element for the target model in advance. This is not limited herein.

In this embodiment, the first network element uses a vertical federated learning manner to unite second network elements to implement local distributed model training. Therefore, data privacy and data security in the second network elements can be ensured without sharing data on the second network elements in a communication network, so that a model training effect can be further ensured.

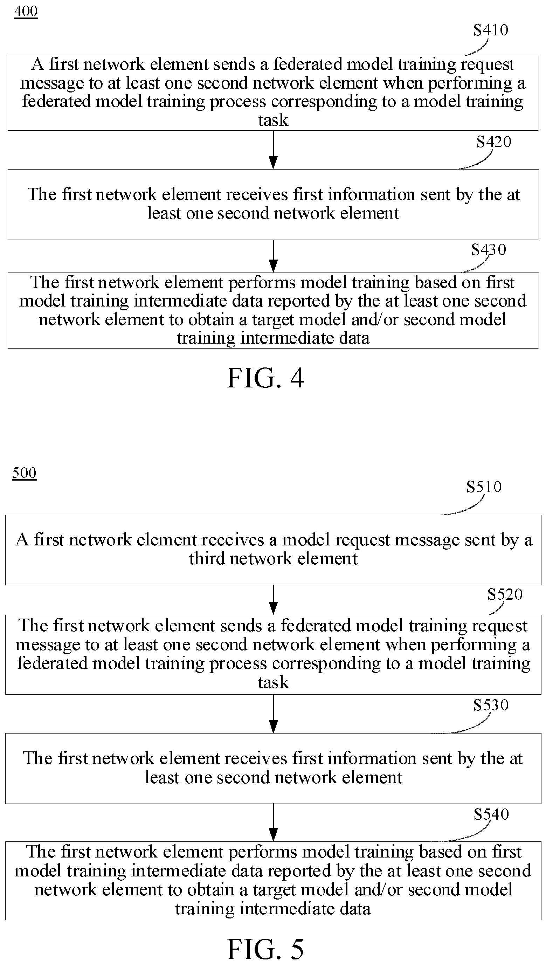

FIG. 4 is a schematic flowchart of a model training method 400 according to an example embodiment of this application. The method 400 may be performed by, but not limited to, a first network element (for example, a terminal or a network-side device), and may be specifically performed by hardware and/or software installed on the first network element. In this embodiment, the method 400 may include at least the following steps.

S410: The first network element sends a federated model training request message to at least one second network element when performing a federated model training process corresponding to a model training task.

The at least one second network element is a network element participating in the federated model training process.

It may be understood that, for an implementation process of S410, in addition to referring to the related description in the method embodiment 300, in an implementation, the federated model training request message may at least include at least one of the following (11) to (18).

(11) Model instance identifier information (model instance ID). The model instance identifier information is used for uniquely identifying a target model generated in the first network element (that is, the model instance identifier information corresponds to the target model), to facilitate recognition, calling, consumption, and the like of the target model.

In an implementation, the model instance identifier information is assigned by the first network element. For example, when determining to perform the federated model training process corresponding to the model training task, the first network element correspondingly assigns one piece of model instance identifier information to the model training task, indicating a model entity obtained through training of the federated model training process, that is, the target model.

Based on this, the model instance identifier information corresponds to or includes at least one of the following (111) to (115).

(111) Related information of the first network element, for example, identifier information (ID), fully qualified domain name (Fully Qualified Domain Name, FQDN) information, name information, address information, and the like of the first network element.

(112) First time, indicating that the model training task is performed based on training data generated in the first time.

Optionally, the first time and a subsequent second time may be time periods or time points. For example, the first time may be October 11, 2021, or the like.

In addition, each of the first time and the second time may be a relative time or an absolute time. This is not limited herein.

(113) Second time, indicating a completion time of the federated model training process.

(114) Related information of the second network element, for example, name information, FQDN information, identifier information, address information, and the like of the second network element.

(12) Type information of the model training task. The type information may include an analytics identifier (analytics ID), a model identifier (model ID), and the like, indicating a machine learning task (that is, the model training task) for which the federated model training process performs model training.

For example, a character string "analytics ID/model ID = UE mobility" may be used to indicate that model training needs to be performed for a movement trajectory of UE, to obtain an AI model of the movement trajectory of the UE. It should be noted that, in addition to the foregoing representation manner of a character string type, the type information may be represented in a digital representation manner or another coding representation manner. This is not limited herein.

(13) Identifier information of the model training task. Similar to the foregoing type information of the model training task, the identifier information of the model training task may also include an analytics ID, a model ID, and the like, indicating a machine learning task (that is, the model training task) for which the federated model training process performs model training.

For example, a character string "analytics ID/model ID = UE mobility" may be used to indicate that model training needs to be performed for a movement trajectory of UE, to obtain an AI model of the movement trajectory of the UE. It should be noted that, in addition to the foregoing representation manner of a character string type, the identifier information may be represented in a digital representation manner or another coding representation manner. This is not limited herein.

It may be understood that, to avoid information redundancy, the federated model training request message may include either of the identifier information of the model training task and the type information of the model training task.

(14) First indication information, indicating that the federated model training process is one vertical federated learning process. The first indication information may be indicated in an implicit or explicit manner. For example, for the indication in the implicit manner, the model instance identifier information included in the federated model training request message includes the identifier information of the model training task, and the second network element may determine that the federated model training process is one vertical federated learning process or the like. This is not limited herein.

(15) Related information of a first filter (filter), which may also be understood as filter information (filter information) of model training. The related information of the first filter (filter) is used for limiting at least one of a target object (for example, target UE (target UE(s))), a target time (for example, a target time period (target time period)), a target area (for example, a target area of interest (target area of interest, (target AOI)) corresponding to the model training task, so that the second network elements may acquire appropriate training data based on the related information of the first filter to perform local model training.

(16) Model training configuration information. The model training configuration information is used for aligning model training methods and/or training parameters for the vertical federated learning process. That is, the model training configuration information indicates a method, a model algorithm, or the like used by the second network element to perform local model training. For example, the second network element may perform training or the like on a local training model based on the model training configuration information.

In an implementation, the model training configuration information at least includes at least one of the following (161) to (163).

(161) Model structure information. The model structure information indicates a specific type (for example, a neural network, a deep neural network (DNN), a convolutional neural network (CNN), a recurrent neural network (RNN), a linear structure, or the like) of a model structure used in a current vertical federated learning training process. This enables all training entities to use the model structure information to perform model training.

In addition, for a neural network model structure, the model structure information may further specifically indicate a layer, a neuron node, a relationship between an input and an output of each layer, or the like of a neural network.

(162) Model hyperparameter information. The model hyperparameter information is a configuration variable outside the target model, is generally used for a training process of a model parameter, and may usually be directly specified by a practitioner, for example, a parameter specified before the federated model training process is started, used for defining a concept about a higher layer, for example, complexity or a learning capability, of a model.

Optionally, the model hyperparameter information may include an algorithm agreed for model training, a quantity of trees or a depth of a tree, a quantity of potential factors in matrix decomposition, a learning rate, a quantity of hidden layers in a deep neural network, a quantity of clusters in k-mean clustering, a loss function corresponding to the target model, a predetermined value (corresponding to the loss function) used for determining whether the target model converges, and the like. This is not limited herein.

(163) Type information of training data in the federated model training process. The training data may also be understood as input data and/or output data in the model training process, and is used for recommending a type of input data and/or a type of output data used in a current federated model training process to the second network element.

For example, when the second network element is an AMF, the type information of the training data is used for recommending, to the AMF, that two types of input data including a UE location (location) and an AMF load should be used in the current federated model training process to train a local training model of the AMF.

(17) Feedback information of model training data, that is, reported information of model training results of the second network elements. For example, the feedback information of the model training data is used for limiting information such as format information (for example, ONNX, TensorFlow, or the like) and a reporting condition when the second network elements feed back first model training intermediate data.

Optionally, the reporting condition may include event triggering and/or period triggering. The event triggering may include any one of (171) to (173).

(171) When a quantity of rounds (or a quantity of times) of training of training a local model by the second network element reaches the predetermined value, the second network element reports the first model training intermediate data. For different second network elements, different quantities of rounds of training may be specified by the first network element in the reported information. This may enable the first network element to align paces of the first model training intermediate data reported by various training entities (that is, the second network elements) in a model training and iteration process, to ensure that reporting paces of the training entities consistent, avoid a straggler problem, and ensure a model training effect.

(172) Before a reporting time reaches a maximum wait time (or a feedback deadline time), the second network element reports the first model training intermediate data.

(173) When the local model converges (a loss function corresponding to the local model reaches a preset value), the second network element reports the first model training intermediate data.

The period triggering means that the second network element may periodically report the first model training intermediate data, for example, report one piece of first model training intermediate data or the like every 5 minutes.

(18) Related information of the network elements participating in the federated model training process, indicating, to the second network element, another second network element, the first network element, and/or the like participating in the current federated model training process. Optionally, the related information of the network elements may include network element type information, identifier information, address information, or the like of the second network elements and network element type information, identifier information, address information, or the like of the first network element.

It may be understood that, which information of the foregoing (11) to (18) is specifically included in the federated model training request message may be agreed in a protocol, configured by a higher layer, or configured on a network side. This is not limited herein.

In addition, when a plurality of second network elements participate in the federated model training process, content in the federated model training request messages of the second network elements may be partially the same, or may be partially different. This is not limited herein.

Further, in addition to the foregoing implementations, in this embodiment, when the first network element determines whether to perform the federated model training process corresponding to the model training task, in addition to being triggered by the first network element or a third network element, it may further be necessary to first determine whether a first condition is met or not met, to further determine, depending on whether the first condition is met or not met, whether to perform the federated model training process. For example, when determining that the first condition is met, the first network element determines to perform the federated model training process corresponding to the model training task. Certainly, the first condition may be understood as a factor, a triggering condition, or the like used by the first network element to determine that it is necessary to perform the federated model training process.

Based on this, the first condition may at least include at least one of the following (21) to (23).

(21) The first network element does not store or cannot obtain all or some training data corresponding to the model training task. For example, the first network element may lack some or all training data of the training entities (that is, the second network elements) due to data security issues or data privacy issues. As a result, the first network element needs to use the federated model training process to unite the second network elements to perform local distributed model training.

(22) The at least one second network element can provide all or some training data corresponding to the model training task.

(23) Samples of training data in the second network elements corresponding to the model training task are the same but sample features are different.

For example, the training data used for federated model training is MM-related data generated in a CN, location data generated in a RAN, or service experience data generated in a third-party service by one same UE or group of UEs.

It may be understood that, which of the foregoing (21) to (23) is included in the first condition may be agreed in a protocol, configured by a higher layer, or configured on a network side. This is not limited herein.

S420: The first network element receives first information sent by the at least one second network element.

It may be understood that, after receiving the federated model training request messages sent by the first network element, the second network elements may perform model training to obtain the local training model, and then perform calculation according to the local training model to generate the first model training intermediate data and send the first model training intermediate data to the first network element.

For example, if the second network elements perform model training based on the federated model training request messages to obtain the local training model, a process in which the second network elements obtain the first model training intermediate data may include the following (31) to (35). The content is as follows.

(31) The second network element determines, based on the first indication information, that the federated model training process needs to be performed. It may be understood that, the first indication information may be obtained from the federated model training request messages sent by the first network element, or, the first indication information may be directly obtained from the first network element. This is not limited herein.

(32) The second network element determines, based on the type information of the model training task or the identifier information (for example, an analytics ID or a model ID) of the model training task, the model training task corresponding to the federated model training process. For example, the second network element may determine, based on a character string "analytics ID/model ID = service experience", that it is necessary to perform model training on an application (application) of a user to obtain a service experience model.

(33) The second network element obtains first training data based on the model training task and the related information of the first filter.

For example, the second network element may determine, based on the model training task and the related information of the first filter, to acquire training data of all UEs in a period of 07:00-09:00 every week in a cell 1. A type of the acquired data may be configured inside a training entity or determined based on the type information of the training data included in the federated model training request message. This is not limited herein.

(34) The second network element performs the model training based on the model training configuration information and the first training data to obtain the local training model.

For example, the second network element may determine a training manner, for example, a model structure, an algorithm, a hyperparameter, and the like, of the local training model based on the model training configuration information, and train the local training model according to the training manner and the foregoing first training data, to obtain the local training model (that is, model parameter adjustment is completed).

(35) The second network element calculates second training data based on the local training model to obtain the first model training intermediate data corresponding to the second training data.

After the training of the local training model is completed, the second network element may calculate the second training data based on the local training model to obtain the first model training intermediate data corresponding to the second training data.

It is to be noted that, the first model training intermediate data has a sample granularity. That is, each sample corresponds to one piece of first model training intermediate data. In addition, the first training data and the second training data may be the same or different. That is, the second network element may train the local model and calculate the first model training intermediate data based on same input data or based on different input data. This is not limited herein.

For example, when the second network elements are a RAN and a CN, the RAN may determine, based on "analytics ID/model ID = service experience", that the first training data $x_i^A = (\text{UE location, RAN volume, ...})$, where $i$ denotes an $i$th sample, and $x_i^A$ is input data corresponding to a sample $i$), and determine to use a support vector machine algorithm in a linear regression model structure to train the local training model $f(x) = \theta_A x_i^A$, to obtain an intermediate calculation result $\theta_A x_i^A$, that is, the first model training intermediate data, of the local model.

Similarly, the RAN determines, based on "analytics ID/model ID = service experience", that local input data $x_i^B = (\text{AMF load, ...})$, and determines to use a support vector machine algorithm in a linear regression model structure to train the local model $h(x) = \theta_B x_i^B$, to obtain an intermediate calculation result $\theta_B x_i^B$, that is, the first model training intermediate data, of the local model.

Therefore, in this case, after obtaining the first model training intermediate data, the RAN and the CN may report the first model training intermediate data (for example, the foregoing $\theta_A x_i^A$ and $\theta_B x_i^B$)) to the first network element through the first information.

Certainly, the first information includes the first model training intermediate data, and in addition, in an implementation, the first information may further include at least one of the following (41) and (42).

(41) Model instance identifier information, used for performing model association by the first network element. The model instance identifier information reported by the second network element may be determined based on the model instance identifier information in the federated model training request message.

(42) Sample identifier information, for example, $ID_i^A$ or $ID_i^B$, of the samples corresponding to the first model training intermediate data in the second network element. It is to be noted that, for one same sample i, sample identifiers of the sample i in two training entities may be the same or different.

S430: The first network element performs model training based on the first model training intermediate data reported by the at least one second network element to obtain a target model and/or second model training intermediate data.

It may be understood that, for an implementation process of S430, refer to the related description in the foregoing method embodiment 300, and in addition, as a possible implementation, in consideration of that target training data and the first model training intermediate data correspond to the same samples, before the step of performing model training based on the first model training intermediate data reported by the at least one second network element, the first network element may further perform data association based on the sample identifier information, to enable target training data in the first network element and/or the first model training intermediate data reported by the at least one second network element that have same samples to be aligned, that is, align samples for different intermediate results corresponding to the sample i.

For example, a mapping relationship between identifier information corresponding to the sample i in different training entities is obtained from inside the first network element or obtained from another network element or device. For example, a mapping relationship between $ID_i^A$ and $ID_i^B$ is obtained, and it is obtained that the two correspond to one same sample i. For example, when the sample i is UEi, $ID_i^A$ of UEi in the RAN is RAN NGAP IDi of UEi, and $ID_i^B$ of UEi in the AMF is AMF NGAP Idi of UEi. A mapping relationship between RAN NGAP IDi and AMF NGAP IDi is stored in the first network element, and different first model training intermediate data of same UEi is determined through the mapping relationship.

In this case, the first network element further performs the model training based on the aligned data and the first model training intermediate data and the target training data in the first network element.

For example, the first network element uses one or more intermediate results (for example, the foregoing $\theta_A x_i^A$ and $\theta_B x_i^B$ ) corresponding to the sample i reported by the training entities as all or some first training data (the first network element may further have another input data type corresponding to the sample i), and performs general model training based on label data ( $y_i$ ) stored in the first network element and through a model training method (the model structure information, the model hyperparameter information, and the like) that is from the first network element or is agreed with local training entities in S410, to obtain a general model (that is, the target model, or referred to as a top model).

The first network element generates the target model and/or generates the second model training intermediate data based on a current round of iteration. In an implementation, the second model training intermediate data may be gradient values of a loss function for parameters of local training models, for example, a gradient of a loss function L for $\theta_A$ and a gradient of the loss function L for $\theta_B$, that is, the second model training intermediate data includes at least: a gradient of a loss function of the target model for a parameter of a local training model of the at least one second network element.

In an implementation, the loss function L may be represented as:

$$L = \min_{\theta_A,\theta_B} \sum_i \left\| \theta_A x_i^A + \theta_B x_i^B - y_i \right\|^2 + \frac{\lambda}{2}\left( \left\| \theta_A \right\|^2 + \left\| \theta_B \right\|^2 \right).$$

Certainly, the first network element may send second information to the at least one second network element when a calculation result of a loss function of the target model does not meet a predetermined requirement (for example, a precision value of the loss function does not reach the predetermined value), where the second information includes at least the second model training intermediate data, to enable the second network elements to perform the local model training again based on the second model training intermediate data to reobtain the first model training intermediate data.

For example, corresponding to different second network elements, the first network element delivers corresponding second model training intermediate data. For example, a gradient of the loss function L for a current parameter (determined based on the first model training intermediate data reported by the RAN) of a local model of the RAN is sent to the RAN, and a gradient of the loss function L for a current parameter (determined based on the first model training intermediate data reported by the AMF) of a local model of the AMF is sent to the AMF. Correspondingly, after receiving the second model training intermediate data, the RAN and the AMF may adjust the parameters of the local model based on the second model training intermediate data, to obtain a local model after the parameter adjustment, and reobtain the first model training intermediate data based on the local model after the parameter adjustment.

In this embodiment, depending on whether the target model converges, the first network element and the second network element may repeat the foregoing federated model training process, until the obtained target model in the first network element converges. That the target model converges means that the precision value of the loss function corresponding to the target model meets the predetermined requirement or reaches the predetermined value.

In addition, when delivering the second model training intermediate data, the first network element may further deliver the model instance identifier information, used for performing model correspondence and association by the second network element. In addition, the first network element may further deliver sample identifier information of the sample i corresponding to the second network elements, used for performing sample association by the second network elements. For example, $ID_i^A$ corresponding to the sample i is sent to the RAN, and $ID_i^A$ corresponding to the sample i is sent to the AMF.

It is to be noted that, the second model training intermediate data sent by the first network element may be used for various second network elements. That is, different second model training intermediate data may correspond to different second network elements.

FIG. 5 is a schematic flowchart of a model training method 500 according to an example embodiment of this application. The method 500 may be performed by, but not limited to, a first network element (for example, a terminal or a network-side device), and may be specifically performed by hardware and/or software installed on the first network element. In this embodiment, the method 500 may include at least the following steps.

S510: The first network element receives a model request message sent by a third network element.

The model request message includes at least one of the following (51) to (54).

(51) Type information of a model training task.

(52) Identifier information of the model training task.

For the type information of the model training task and the identifier information of the model training task, refer to the foregoing related description of the type information of the model training task and the identifier information of the model training task in a federated model training request message. To avoid repetition, details are not described herein again.

(53) Related information of a second filter, used for limiting at least one of a target object, a target time, or a target area corresponding to the model training task.

(54) Model feedback related information. The model feedback related information may include at least one of a model feedback format or a feedback condition.

The model feedback format may be understood as model framework information, for example, a TensorFlow and Pytorch model framework-based expression manner, or may be understood as an inter-framework-based model expression manner (for example, ONNX), or the like.

The feedback condition may include event triggering and/or period triggering. The event triggering includes at least one of (541) to (543).

(541) When a quantity of rounds (or a quantity of times) of training of training a target model by the first network element reaches a predetermined value, the first network element feeds back the target model.

(542) Before a training time reaches a maximum wait time, the first network element feeds back the target model.

(543) When the target model converges (a loss function corresponding to the target model reaches a preset value and a corresponding preset value), the first network element feeds back the target model, and the like.

The period triggering means that the first network element may periodically feed back the target model to the third network element, for example, feed back the target model and the like once every 5 minutes.

Certainly, in addition to the foregoing feedback condition, model feedback information may further indicate the first network element to feed back the target model in manners such as one-time feedback, repeated continuous update and feedback, deadline time feedback, periodic feedback, and the like. This is not limited herein.

It is to be noted that, a federated model training request message sent by the first network element to a second network element may be determined by the first network element based on the model request message. For example, the type information of the model training task and the identifier information of the model training task in the federated model training request message may be the same as the type information of the model training task and the identifier information of the model training task in the model request message. In another example, related information of a first filter in the federated model training request message may be the same as or different from the related information of the second filter in the model request message. This is not limited herein.

S520: The first network element sends a federated model training request message to at least one second network element when performing a federated model training process corresponding to a model training task, where the at least one second network element is a network element participating in the federated model training process.

S530: The first network element receives first information sent by the at least one second network element, where the first information includes at least first model training intermediate data, the first model training intermediate data corresponds to samples used for federated model training in the second network element, and the samples used for federated model training in the second network elements are the same but sample features are different.

S540: The first network element performs model training based on the first model training intermediate data reported by the at least one second network element to obtain a target model and/or second model training intermediate data.

It may be understood that, for an implementation process of S520 to S540, refer to the foregoing related description of the method embodiments 300 and/or 400. To avoid repetition, details are not described herein again.

Certainly, in an implementation, the first network element may send related information of the target model to the third network element when a calculation result of the loss function of the target model meets a predetermined requirement (for example, a precision value of the loss function reaches the predetermined value, that is, the target model converges), for the third network element to perform a corresponding task based on the target model.

The related information of the target model includes at least one of the following (61) to (64):

(61) Model instance identifier information. For the information, refer to the foregoing description about the model instance identifier information. To avoid repetition, details are not described herein again.

(62) Target model information. The target model information includes at least one of the following (621) to (626).

(621) Model structure information. The model structure information indicates a specific type (for example, a neural network, a deep neural network (DNN), a convolutional neural network (CNN), a recurrent neural network (RNN), a linear structure, or the like) of a model structure of the target model. In addition, for a neural network model structure, the model structure information may further specifically indicate a layer, a neuron node, a relationship between an input and an output of each layer, or the like of a neural network.

(622) Model parameter information. The model parameter information is a configuration variable inside the target model, is used for defining a function of the target model, and may be obtained in a data estimation or model training manner. For example, the model parameter information may include a weight in an artificial neural network, a support vector in a support vector machine, a coefficient in linear regression or logical regression, and the like.

(623) Model algorithm information. For example, the model algorithm information may include, but not limited to, a decision tree, a Bayesian classifier, K neighbors, a support vector machine, and the like.

(624) Model hyperparameter information. The model hyperparameter information is a configuration variable outside the target model, is generally used for a training process of a model parameter, and may usually be directly specified by a practitioner. For example, the model hyperparameter information may include a learning rate of a training neural network, C and sigma hyperparameters of a support vector machine, a parameter k in K neighboring domains, and the like.

(625) Type information of model input data.

(626) Type information of model output data.

(63) Second indication information, indicating that the target model is a vertical federated learning model, or indicating that the model is generated through a federated learning process. Optionally, the second indication information may perform explicit indication or implicit indication. For example, when the second indication information is implicit indication information, implicit indication may be implemented through the model instance identifier information or related information of the second network element.

(64) The related information of the second network element, for example, network element type information, identifier information, FQDN information, address information, and the like of the second network element.

In this embodiment, when receiving the model training request message sent by the third network element, the first network element triggers the federated model training process, to unite the second network elements to perform local distributed model training to obtain the target model. Therefore, a model training requirement on the third network element can be met while the security and privacy of data on the second network element are ensured.

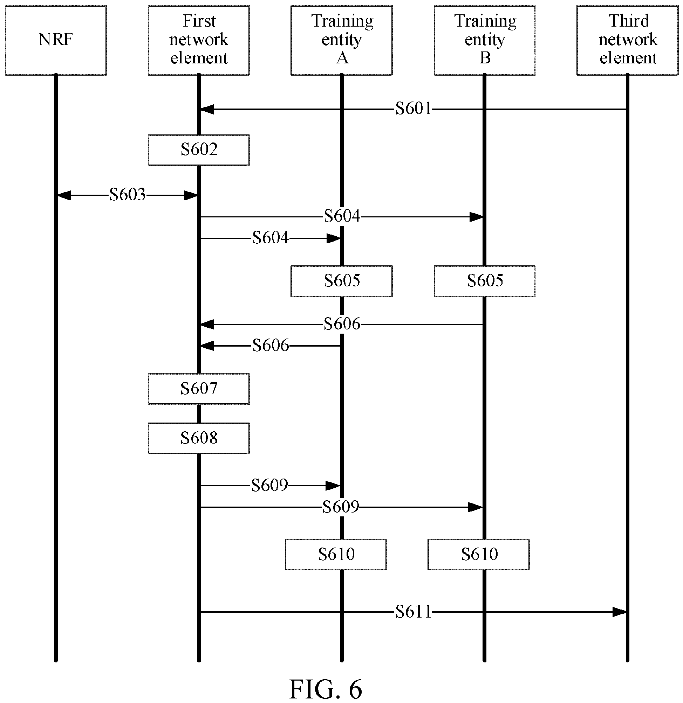

Based on the foregoing description of the method embodiments 200 to 500, a model training method given in this application is further described below with reference to FIG. 6 and through an example in which the federated model training process is triggered by the third network element. Content is as follows. It is assumed that 2 second network elements participate in the federated model training process.

S601: The third network element sends a model request message to the first network element.

S602: The first network element determines, based on the model request message, to perform the federated model training process.

S603: The first network element obtains, from an NRF, 2 second network elements, for example, a training entity A and a training entity B, that can participate in the federated model training process.

S604: The first network element sends federated model training request messages to the training entity A and the training entity B.

S605: After receiving the federated model training request message, the training entity A trains a local training model based on the federated model training request message, to further obtain the first model training intermediate data based on the local training model obtained through the training.

Correspondingly, after receiving the federated model training request message, the training entity B trains the local training model based on the federated model training request message, to further obtain first model training intermediate data based on the local training model obtained through the training.

S606: The training entity A and the training entity B separately report first information to the first network element, where the first information includes at least the first model training intermediate data.

S607: The first network element performs model training based on the received first model training intermediate data reported by the training entity A and the training entity B to obtain a target model and/or second model training intermediate data.

S608: The first network element determines whether a calculation result of a loss function corresponding to the target model meets a predetermined requirement.

S609: The first network element sends second information to the training entity A and the training entity B when a calculation result of the loss function of the target model does not meet the predetermined requirement, where the second information includes at least the second model training intermediate data.

S610: The training entity A and the training entity B perform local model training again based on the received second model training intermediate data, and reobtain the first model training intermediate data.

It may be understood that, the first network element and the training entity A and the training entity B repeatedly perform S605 to S610, and stop the federated model training process when the calculation result of the loss function corresponding to the target model meets the predetermined requirement, that is, the target model converges.

S611: The first network element sends related information of the target model to the third network element when the calculation result of the loss function of the target model meets the predetermined requirement.

It is to be noted that, for an implementation process of the foregoing S601 to S611, refer to the foregoing related description of the method embodiments 300 to 500, and the same or corresponding technical effects are achieved. To avoid repetition, details are not described herein again.

In addition, in this embodiment, the federated model training process may include, but not limited to, the foregoing S601 to S611, for example, may include more or fewer steps than the foregoing S601 to S611. This is not limited herein.

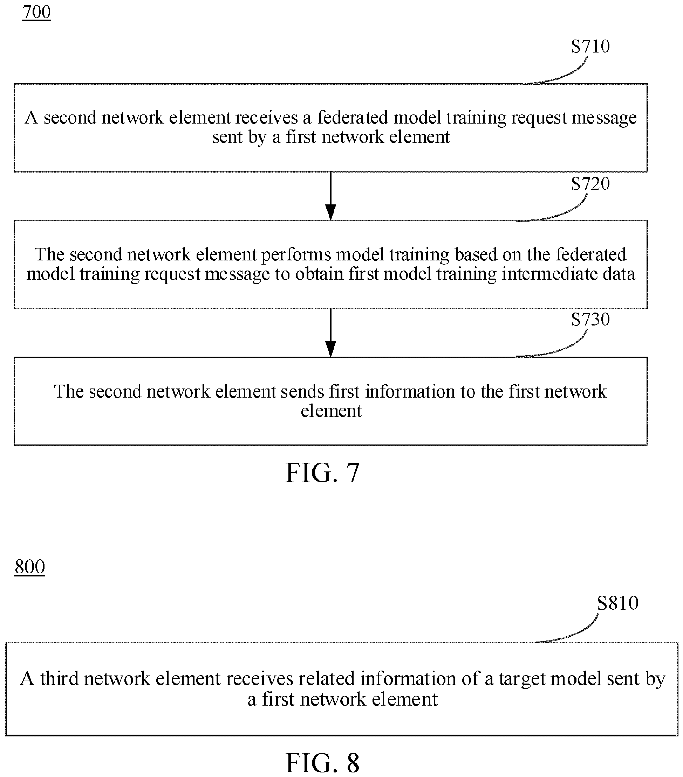

FIG. 7 is a schematic flowchart of a model training method 700 according to an example embodiment of this application. The method 700 may be performed by, but not limited to, a second network element (for example, a terminal or a network-side device), and may be specifically performed by hardware and/or software installed on the second network element. In this embodiment, the method 700 may include at least the following steps.

S710: A second network element receives a federated model training request message sent by a first network element, where the federated model training request message is used for requesting the second network element to participate in a federated model training process corresponding to a model training task.

S720: The second network element performs model training based on the federated model training request message to obtain first model training intermediate data.

S730: The second network element sends first information to the first network element, where the first information includes at least the first model training intermediate data.

The first model training intermediate data corresponds to samples used for federated model training in the second network element. The samples used for the federated model training in the second network element and samples used for the federated model training in a fourth network element are the same but sample features are different. The fourth network element is another network element than the second network element in a plurality of network elements participating in the federated model training process.

Optionally, the federated model training request message includes at least one of the following: model instance identifier information; type information of the model training task; identifier information of the model training task; first indication information, indicating that the federated model training process is one vertical federated learning process; related information of a first filter, used for limiting at least one of a target object, a target time, or a target area corresponding to the model training task; model training configuration information; feedback information of model training data; and related information of the fourth network element.

Optionally, the model instance identifier information corresponds to at least one of the following: related information of the first network element; a first time, indicating that the model training task is performed based on training data generated in the first time; a second time, indicating a completion time of the federated model training process; and related information of the network elements participating in the federated model training process.

Optionally, the model training configuration information includes at least one of the following: model structure information; model hyperparameter information; and type information of training data in the federated model training process.

Optionally, the step of performing, by the second network element, model training based on the federated model training request message to obtain first model training intermediate data includes: performing, by the second network element, the model training based on the federated model training request message to obtain a local training model; and generating, by the second network element, the first model training intermediate data through calculation according to the local training model.

Optionally, the step of performing, by the second network element, the model training based on the federated model training request message to obtain a local training model includes: determining, by the second network element based on the first indication information, that the federated model training process needs to be performed; determining, by the second network element based on the type information of the model training task or the identifier information of the model training task, the model training task corresponding to the federated model training process; obtaining, by the second network element, first training data based on the model training task and the related information of the first filter; and performing, by the second network element, the model training based on the model training configuration information and the first training data to obtain the local training model; and the step of generating, by the second network element, the first model training intermediate data through calculation according to the local training model includes: calculating, by the second network element, second training data based on the local training model to obtain the first model training intermediate data corresponding to the second training data.

Optionally, the first information further includes at least one of the following: model instance identifier information, used for performing model association by the first network element; and sample identifier information of the samples corresponding to the first model training intermediate data in the second network element.

Optionally, the second network element is a network element that is obtained by the first network element from a network repository function NRF based on the model training task and can support the federated model training process.

Optionally, the method further includes: receiving, by the second network element, second information sent by the first network element, where the second information includes at least second model training intermediate data; and performing, by the second network element, local model training again based on the second model training intermediate data to reobtain the first model training intermediate data.

Optionally, the second model training intermediate data includes at least: a gradient of the loss function of the target model for a parameter of a local training model of the at least one second network element.

Optionally, the second information further includes: model instance identifier information, used for performing model association by the second network element.

It may be understood that, for implementation processes of implementations in the method embodiment 700, refer to the foregoing related description of the method embodiments 300 to 600, and the same or corresponding technical effects are achieved. To avoid repetition, details are not described herein again.

FIG. 8 is a schematic flowchart of a model training method 800 according to an example embodiment of this application. The method 800 may be performed by, but not limited to, a second network element (for example, a terminal or a network-side device), and may be specifically performed by hardware and/or software installed on the second network element. In this embodiment, the method 800 may include at least the following steps.

S810: A third network element receives related information of a target model sent by a first network element.

The related information of the target model at least represents a vertical federated model of the target model.

Optionally, the related information of the target model includes at least one of the following: model instance identifier information; target model information, where the target model information includes at least one of model structure information, model parameter information, model algorithm information, model hyperparameter information, type information of model input data, and type information of model output data; second indication information, indicating that the target model is a vertical federated learning model; and related information of a second network element, where the second network element is a network element participating in a federated model training process to obtain the target model.

Optionally, the related information of the target model is sent by the first network element when a calculation result of a loss function of the target model meets a predetermined requirement.

Optionally, before the step of receiving, by a third network element, related information of a target model sent by a first network element, the method further includes: sending, by the third network element, a model request message to the first network element, where the model request message includes at least one of the following:

> type information of a model training task;
> identifier information of the model training task;
> related information of a second filter, used for limiting at least one of a target object, a target time, or a target area corresponding to the model training task; and
> model feedback related information, where the model feedback related information includes at least one of a model feedback format or a feedback condition.

It may be understood that, for implementation processes of implementations in the method embodiment 800, refer to the foregoing related description of the method embodiments 300 to 600, and the same or corresponding technical effects are achieved. To avoid repetition, details are not described herein again.

The model training methods 300 to 800 provided in the embodiments of this application may be performed by a model training apparatus. An example in which the model training apparatus performs the model training method in the embodiments of this application is used to describe the model training apparatus in the embodiments of this application.

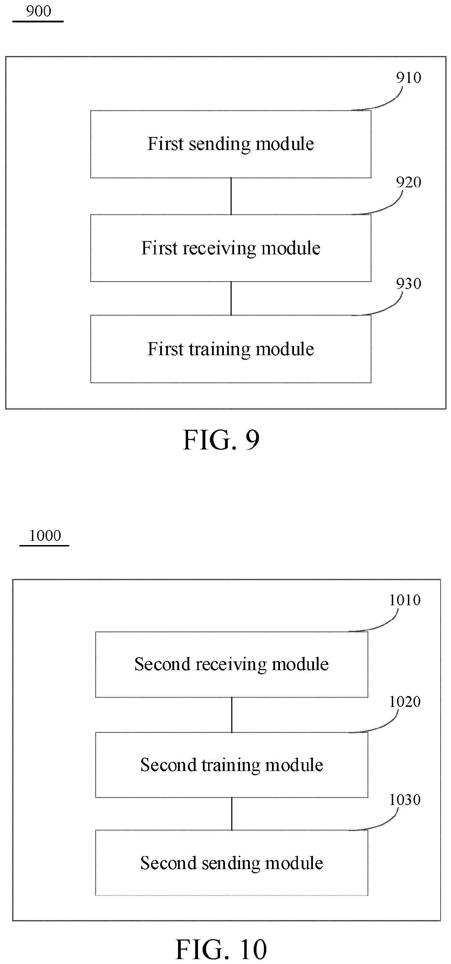

FIG. 9 is a schematic structural diagram of a model training apparatus 900 according to an example embodiment of this application. The apparatus 900 includes: a first sending module 910, configured to send a federated model training request message to at least one second network element when performing a federated model training process corresponding to a model training task, where the at least one second network element is a network element participating in the federated model training process; a first receiving module 920, configured to receive first information sent by the at least one second network element, where the first information includes at least first model training intermediate data, the first model training intermediate data corresponds to samples used for federated model training in the second network element, and the samples used for federated model training in the second network elements are the same but sample features are different; and a first training module 930, configured to perform model training based on the first model training intermediate data reported by the at least one second network element to obtain a target model and/or second model training intermediate data.

Optionally, the federated model training request message includes at least one of the following: model instance identifier information, where the model instance identifier information corresponds to the target model, and is assigned by the first network element; type information of the model training task; identifier information of the model training task; first indication information, indicating that the federated model training process is one vertical federated learning process; related information of a first filter, used for limiting at least one of a target object, a target time, or a target area corresponding to the model training task; model training configuration information; feedback information of model training data; and related information of the network elements participating in the federated model training process.

Optionally, the model instance identifier information corresponds to at least one of the following: related information of the first network element; a first time, indicating that the model training task is performed based on training data generated in the first time; a second time, indicating a completion time of the federated model training process; and related information of the second network element.

Optionally, the model training configuration information includes at least one of the following: model structure information; model hyperparameter information; and type information of training data in the federated model training process.

Optionally, the second network element is a network element that is obtained by the first network element from a network repository function NRF based on the model training task and can support the federated model training process.

Optionally, the first training module 930 is further configured to determine that a first condition is met, where the first condition includes at least one of the following: the first network element does not store or cannot obtain all or some training data corresponding to the model training task; the at least one second network element can provide all or some training data corresponding to the model training task; and samples of training data in the second network elements corresponding to the model training task are the same but sample features are different.

Optionally, the first model training intermediate data is generated by the second network element through calculation according to a local training model.

Optionally, the first information further includes at least one of the following: model instance identifier information, used for performing model association by the first network element; and sample identifier information of the samples corresponding to the first model training intermediate data in the second network element.

Optionally, the first training module 930 is further configured to perform data association based on the sample identifier information, to enable target training data in the first network element and/or the first model training intermediate data reported by the at least one second network element that have same samples to be aligned.

Optionally, the step in which the first training module 930 performs the model training based on the first model training intermediate data reported by the at least one second network element includes: performing the model training based on the first model training intermediate data and the target training data in the first network element.

Optionally, the first sending module 910 is further configured to send second information to the at least one second network element when a calculation result of a loss function of the target model does not meet a predetermined requirement, where the second information includes at least the second model training intermediate data.

Optionally, the second model training intermediate data includes at least: a gradient of the loss function of the target model for a parameter of a local training model of the at least one second network element.

Optionally, the second information further includes: model instance identifier information, used for performing model association by the second network element.

Optionally, the first receiving module 920 is further configured to receive a model request message sent by a third network element, where the model request message includes at least one of the following: type information of the model training task; identifier information of the model training task; related information of a second filter, used for limiting at least one of a target object, a target time, or a target area corresponding to the model training task; and model feedback related information, where the model feedback related information includes at least one of a model feedback format or a feedback condition.

Optionally, the first sending module 910 is further configured to send related information of the target model to the third network element when a calculation result of a loss function of the target model meets a predetermined requirement, where the related information of the target model includes at least one of the following: model instance identifier information; target model information; second indication information, indicating that the target model is a vertical federated learning model; and related information of the second network element.

FIG. 10 is a schematic structural diagram of a model training apparatus 1000 according to an example embodiment of this application. The apparatus 1000 includes: a second receiving module 1010, configured to receive a federated model training request message sent by a first network element, where the federated model training request message is used for requesting a second network element to participate in a federated model training process corresponding to a model training task; a second training module 1020, configured to perform model training based on the federated model training request message to obtain first model training intermediate data; and a second sending module 1030, configured to send first information to the first network element, where the first information includes at least the first model training intermediate data. The first model training intermediate data corresponds to samples used for federated model training in the second network element. The samples used for the federated model training in the second network element and samples used for the federated model training in a fourth network element are the same but sample features are different. The fourth network element is another network element than the second network element in a plurality of network elements participating in the federated model training process.

Optionally, the federated model training request message includes at least one of the following: model instance identifier information; type information of the model training task; identifier information of the model training task; first indication information, indicating that the federated model training process is one vertical federated learning process; related information of a first filter, used for limiting at least one of a target object, a target time, or a target area corresponding to the model training task; model training configuration information; feedback information of model training data; and related information of the fourth network element.

Optionally, the model instance identifier information corresponds to at least one of the following: related information of the first network element; a first time, indicating that the model training task is performed based on training data generated in the first time; a second time, indicating a completion time of the federated model training process; and related information of the network elements participating in the federated model training process.

Optionally, the model training configuration information includes at least one of the following: model structure information; model hyperparameter information; and type information of training data in the federated model training process.

Optionally, the step in which the second training module 1020 performs the model training based on the federated model training request message to obtain the first model training intermediate data includes: performing the model training based on the federated model training request message to obtain a local training model; and generating the first model training intermediate data through calculation according to the local training model.

Optionally, the step in which the second training module 1020 performs the model training based on the federated model training request message to obtain a local training model includes: determining, based on the first indication information, that the federated model training process needs to be performed; determining, based on the type information of the model training task or the identifier information of the model training task, the model training task corresponding to the federated model training process; obtaining first training data based on the model training task and the related information of the first filter; and performing, by the second network element, the model training based on the model training configuration information and the first training data to obtain the local training model; and the step in which the second training module 1020 generates the first model training intermediate data through calculation according to the local training model includes: calculating, by the second network element, second training data based on the local training model to obtain the first model training intermediate data corresponding to the second training data.

Optionally, the first information further includes at least one of the following: model instance identifier information, used for performing model association by the first network element; and sample identifier information of the samples corresponding to the first model training intermediate data in the second network element.

Optionally, the second network element is a network element that is obtained by the first network element from a network repository function NRF based on the model training task and can support the federated model training process.

Optionally, the second receiving module 1010 is further configured to receive second information sent by the first network element, where the second information includes at least second model training intermediate data; and the second training module 1020 is further configured to perform local model training again based on the second model training intermediate data to reobtain the first model training intermediate data.

Optionally, the second model training intermediate data includes at least: a gradient of the loss function of the target model for a parameter of a local training model of the at least one second network element.

Optionally, the second information further includes: model instance identifier information, used for performing model association by the second network element.

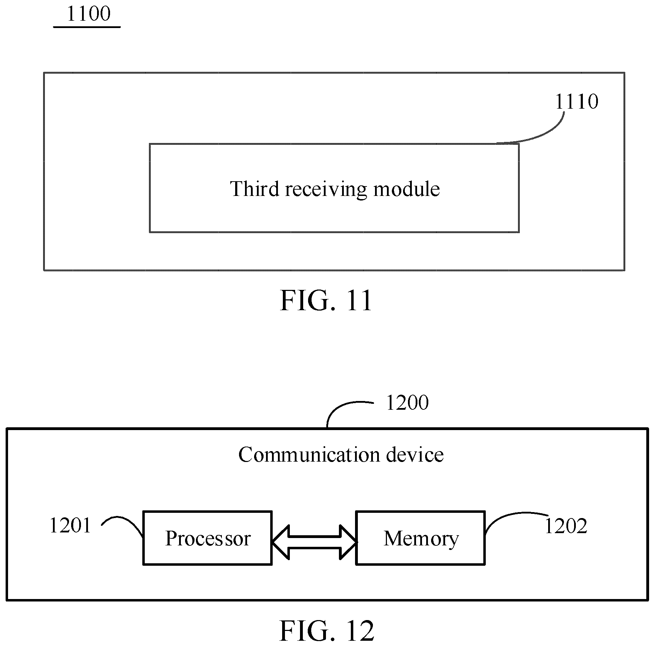

FIG. 11 is a schematic structural diagram of a model training apparatus 1100 according to an example embodiment of this application. The apparatus 1100 includes: a third receiving module 1110, configured to receive related information of a target model sent by a first network element. The related information of the target model at least represents a vertical federated model of the target model.

Optionally, the related information of the target model includes at least one of the following: model instance identifier information; target model information; second indication information, indicating that the target model is a vertical federated learning model; and related information of a second network element, where the second network element is a network element participating in a federated model training process to obtain the target model.

Optionally, the related information of the target model is sent by the first network element when a calculation result of a loss function of the target model meets a predetermined requirement.

Optionally, the apparatus 1100 further includes: a third sending module, configured to send a model request message to the first network element, where the model request message includes at least one of the following: type information of the model training task; identifier information of the model training task; related information of a second filter, used for limiting at least one of a target object, a target time, or a target area corresponding to the model training task; and model feedback related information, where the model feedback related information includes at least one of a model feedback format or a feedback condition.

Each of the model training apparatuses 900, 1000, and 1100 in the embodiments of this application may be a communication device, for example, a communication device with an operating system, or may be a component, for example, an integrated circuit or a chip, in a communication device. The communication device may be a terminal, or may be a network-side device. For example, the terminal may include, but not limited to, the types of the terminal 11 listed above, and the network-side device may include, but not limited to, the types of the network-side device 12 listed above. This is not specifically limited in the embodiments of this application.

The model training apparatuses 900, 1000, and 1100 in the embodiments of this application can implement various processes implemented in the method embodiments in FIG. 3 to FIG. 8, and the same technical effects are achieved. To avoid repetition, details are not described herein again.

Optionally, as shown in FIG. 12, embodiments of this application further provide a communication device 1200, including a processor 1201 and a memory 1202. The memory 1202 stores a program or instructions executable on the processor 1201. For example, when the communication device 1200 is a terminal, the program or instructions, when being executed by the processor 1201, implement the various steps of the foregoing model training method embodiments 300 to 800, and can achieve the same technical effects. When the communication device 1200 is a network-side device, the program or instructions, when being executed by the processor 1201, implement various steps of the foregoing method embodiments 300 to 800, and can achieve the same technical effects. To avoid repetition, details are not described herein again.

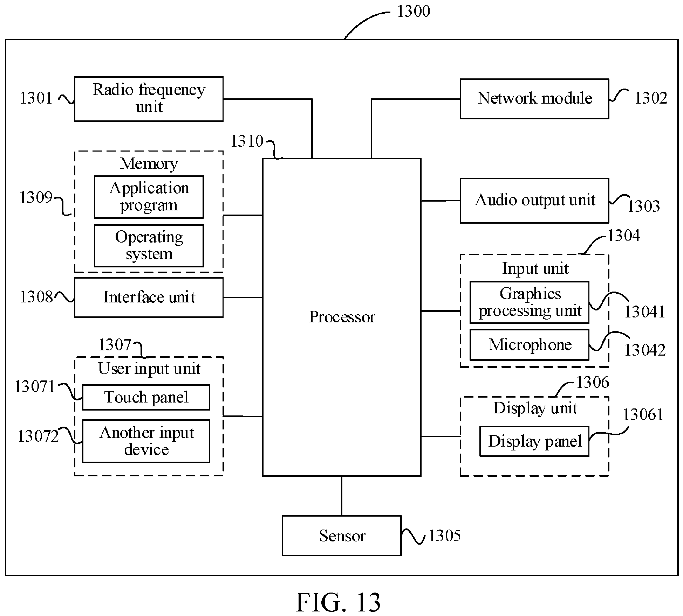

In an implementation, the communication device 1200 may be a terminal. The terminal may include a processor and a communication interface. The communication interface is coupled to the processor. The processor is configured to run the program or instructions to implement the steps of the method in the method embodiments 300 to 800. The terminal embodiment corresponds to the foregoing method embodiment on a terminal side. Various implementation processes and implementations in the foregoing method embodiments are applicable to the terminal embodiment, and can achieve the same technical effects. Specifically, FIG. 13 is a schematic diagram of a hardware structure of a terminal that implements the embodiments of this application.

The terminal 1300 includes, but is not limited to, at least some components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art may understand that, the terminal 1300 may further include a power supply (for example, a battery) for supplying power to the components. The power supply may be logically connected to the processor 1310 by a power management system, thereby implementing functions such as charging, discharging, and power consumption management through the power management system. The terminal structure shown in FIG. 13 does not constitute a limitation on the terminal, and the terminal may include more or fewer components than shown, or combine some components, or have different component arrangements. Details are not described herein again.

It should be understood that, in the embodiments of this application, the input unit 1304 may include a graphics processing unit (Graphics Processing Unit, GPU) 13041 and a microphone 13042. The graphics processing unit 13041 performs processing on image data of a static picture or a video that is obtained by an image acquisition device (for example, a camera) in a video acquisition mode or an image acquisition mode. The display unit 1306 may include a display panel 13061. The display panel 13061 may be configured in the form of a liquid crystal display, an organic light-emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but not limited to, a physical keyboard, a functional key (for example, a volume control key or a switch key), a track ball, a mouse, and a joystick, which are not described herein in detail.

In the embodiments of this application, after receiving downlink data from the network-side device, the radio frequency unit 1301 may transmit the downlink data to the processor 1310 for processing. In addition, the radio frequency unit 1301 may send uplink data to the network-side device. Generally, the radio frequency unit 1301 includes, but is not limited to, an antenna, an amplifier, a transceiver, a coupler, a low noise amplifier, a duplexer, and the like.

The memory 1309 may be configured to store a software program or instructions and various data. The memory 1309 may mainly include a first storage area for storing a program or instructions and a second storage area for storing data. The first storage area may store an operating system, an application program or instructions required by at least one function (for example, a sound playback function and an image display function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1309 in the embodiments of this application includes, but is not limited to, these memories and any other suitable types.

The processor 1310 may include one or more processing units. Optionally, the processor 1310 integrates an application processor and a modem processor. The application processor mainly processes operations involving an operating system, a user interface, an application program, and the like. The modem processor mainly processes a wireless communication signal, and is, for example, a baseband processor. It may be understood that, the modem processor may alternatively not be integrated in the processor 1310.

The radio frequency unit 1301 is configured to send a federated model training request message to at least one second network element when performing a federated model training process corresponding to a model training task, where the at least one second network element is a network element participating in the federated model training process; and is configured to receive first information sent by the at least one second network element, where the first information includes at least first model training intermediate data, the first model training intermediate data corresponds to samples used for federated model training in the second network element, and the samples used for federated model training in the second network elements are the same but sample features are different. The processor 1310 is configured to perform model training based on the first model training intermediate data reported by the at least one second network element to obtain a target model and/or second model training intermediate data.

In this embodiment, a vertical federated learning manner is used to unite second network elements to implement local distributed model training. Therefore, data privacy and data security in the second network elements can be ensured without sharing data on the second network elements in a communication network, so that a model training effect can be further ensured.

In another implementation, the communication device 1200 may be a network-side device. The network-side device includes a processor and a communication interface. The communication interface is coupled to the processor. The processor is configured to run the program or instructions to implement the steps of the method in the embodiments 300 to 800. The network-side device embodiment corresponds to the foregoing method embodiment on a network-side device side. Various implementation processes and implementations in the foregoing method embodiments are applicable to the network-side device embodiment, and can achieve the same technical effects.

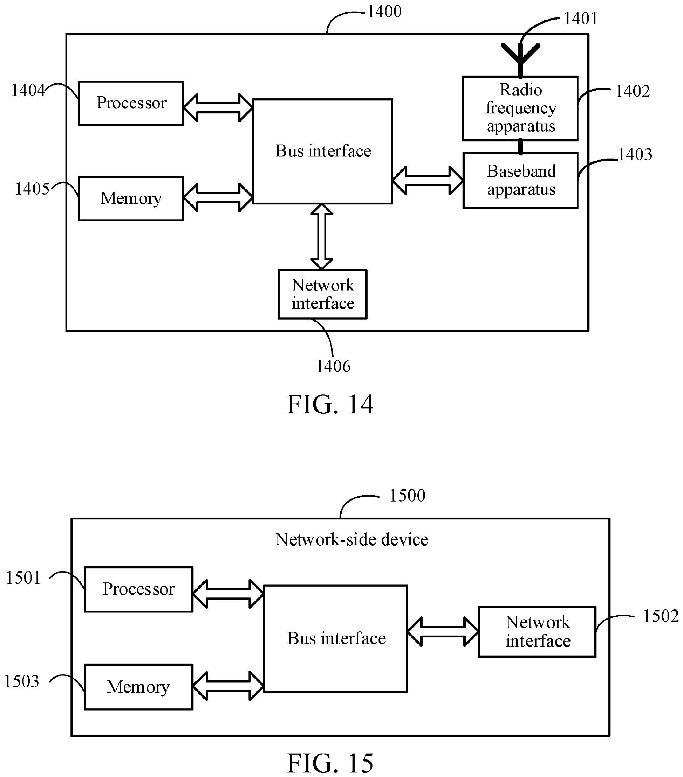

For example, FIG. 14 is a schematic structural diagram of a network-side device according to an embodiment of this application. A network-side device 1400 includes an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and sends the received information to the baseband apparatus 1403 for processing. In a downlink direction, the baseband apparatus 1403 processes information to be sent, and sends the processed information to the radio frequency apparatus 1402. The radio frequency apparatus 1402 processes the received information and sends the processed information through the antenna 1401.

The method performed by the network-side device in the foregoing embodiments may be implemented in the baseband apparatus 1403. The baseband apparatus 1403 includes a baseband processor.

The baseband apparatus 1403 may include, for example, at least one baseband board. A plurality of chips are disposed on the baseband board, as shown in FIG. 14. One of the chips is, for example, a baseband processor, and is connected to the memory 1405 by a bus interface, to call a program in the memory 1405 to perform operations of a network device shown in the foregoing method embodiments.

The network-side device may further include a network interface 1406. The interface is, for example, a common public radio interface (common public radio interface, CPRI).

Specifically, the network-side device 1400 in the embodiments of the present invention further includes instructions or a program that are stored in the memory 1405 and executable on the processor 1404. The processor 1404 calls the instructions or program in the memory 1405 to perform the method performed by the modules in FIG. 9 to FIG. 11, and achieve the same technical effects. To avoid repetition, details are not described herein again.

For example, FIG. 15 is a schematic structural diagram of a network-side device 1500 according to another example embodiment of this application. The network-side device 1500 includes a processor 1501, a network interface 1502, and a memory 1503. The network interface 1502 is, for example, a common public radio interface (common public radio interface, CPRI).

Specifically, the network-side device 1500 in the embodiments of the present invention further includes instructions or a program that are stored in the memory 1503 and executable on the processor 1501. The processor 1501 calls the instructions or program in the memory 1503 to perform the method performed by the modules in FIG. 9 to FIG. 11, and achieve the same technical effects. To avoid repetition, details are not described herein again.

Embodiments of this application further provide a readable storage medium. The readable storage medium stores a program or instructions. The program or instructions, when executed by a processor, implement various processes of the foregoing model training method embodiments, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, an optical disc, or the like.

Embodiments of this application further provide a chip. The chip includes a processor and a communication interface. The communication interface is coupled to the processor. The processor is configured to run a program or instructions in a network-side device, to implement various processes of the foregoing model training method embodiment, and can achieve the same technical effects. To avoid repetition, details are not described herein again.

It should be understood that the chip in the embodiments of this application may also be referred to as a system-level chip, a system chip, a chip system, a system-on-a-chip, or the like.

Embodiments of this application further provide a computer program product. The computer program product includes a processor, a memory, and a program or instructions that are stored in the memory and executable on the processor. The program or instructions, when executed by the processor, implement various processes of the foregoing model training method embodiments, and can achieve the same technical effects. To avoid repetition, details are not described herein again.

Embodiments of this application further provide a model training system, including: a first network element, a second network element, and a third network element. The first network element may be configured to perform the steps of the method in the method embodiments 300 to 600. The second network element may be configured to perform the steps of the method in the method embodiment 700. The third network element may be configured to perform the steps of the method in the method embodiment 800.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. In addition, it is to be noted that the scope of the methods and apparatuses in the implementations of this application is not limited to performing the functions in the order shown or discussed, but may also include performing the functions in a substantially simultaneous manner or in reverse order based on the features involved. For example, the described methods may be performed in a different order than described, and various steps may be added, omitted, or combined. Further, features described with reference to some examples may be combined in other examples.

Through the descriptions of the foregoing implementations, persons skilled in the art may clearly understand that the methods in the foregoing embodiments may be implemented through software and a necessary general hardware platform, and certainly, may also be implemented by hardware, but in many cases, the former manner is a better implementation. Based on such an understanding, the technical solutions of this application essentially or the part contributing to the conventional technology may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, persons of ordinary skill in the art can make many forms without departing from the idea of this application and the scope of protection of the claims. All of the forms fall within the protection of this application.

**Claims**

1.  A model training method, comprising:

    sending, by a first network element, a federated model training request message to at least one second network element when performing a federated model training process corresponding to a model training task, wherein the at least one second network element is a network element participating in the federated model training process;

    receiving, by the first network element, first information sent by the at least one second network element, wherein the first information comprises at least first model training intermediate data, the first model training intermediate data corresponds to samples used for federated model training in the second network element, and the samples used for federated model training in the second network elements are the same but sample features are different; and

    performing, by the first network element, model training based on the first model training intermediate data reported by the at least one second network element to obtain a target model and/or second model training intermediate data.

2.  The method according to claim 1, wherein the federated model training request message comprises at least one of the following:

    model instance identifier information, wherein the model instance identifier information corresponds to the target model, and is assigned by the first network element;

type information of the model training task;

identifier information of the model training task;

first indication information, indicating that the federated model training process is one vertical federated learning process;

related information of a first filter, used for limiting at least one of a target object, a target time, or a target area corresponding to the model training task;

model training configuration information;

feedback information of model training data; and

related information of network elements participating in the federated model training process.

3.  The method according to claim 2, wherein the model instance identifier information corresponds to at least one of the following:

related information of the first network element;

a first time, indicating that the model training task is performed based on training data generated in the first time;

a second time, indicating a completion time of the federated model training process; and

related information of the second network element.

4.  The method according to claim 2, wherein the model training configuration information comprises at least one of the following:

model structure information;

model hyperparameter information; and

type information of training data in the federated model training process.

5.  The method according to claim 1, wherein the second network element is a network element that is obtained by the first network element from a network repository function NRF based on the model training task and can support the federated model training process.

6.  The method according to claim 1, wherein before the step of sending a federated model training request message to at least one second network element, the method further comprises:
determining, by the first network element, that a first condition is met, wherein the first condition comprises at least one of the following:

the first network element does not store or cannot obtain all or some training data corresponding to the model training task;

the at least one second network element can provide all or some training data corresponding to the model training task; and

samples of training data in the second network elements corresponding to the model training task are the same but sample features are different.

7.  The method according to claim 1, wherein the first model training intermediate data is generated by the second network element through calculation according to a local training model.

8.  The method according to claim 1, wherein the first information further comprises at least one of the following:

model instance identifier information, used for performing model association by the first network element; and

sample identifier information of the samples corresponding to the first model training intermediate data in the second network element.

9.  The method according to claim 8, wherein before the step of performing, by the first network element, model training based on the first model training intermediate data reported by the at least one second network element, the method further comprises:
performing, by the first network element, data association based on the sample identifier information, to enable target training data in the first network element and/or the first model training intermediate data reported by the at least one second network element that have same samples to be aligned.

10. The method according to claim 9, wherein the step of performing, by the first network element, model training based on the first model training intermediate data reported by the at least one second network element comprises:
performing, by the first network element, the model training based on the first model training intermediate data and the target training data in the first network element.

**11.** The method according to claim 1, wherein the method further comprises:
sending, by the first network element, second information to the at least one second network element when a calculation result of a loss function of the target model does not meet a predetermined requirement, wherein the second information comprises at least the second model training intermediate data.

**12.** The method according to claim 11, wherein the second model training intermediate data comprises at least: a gradient of the loss function of the target model for a parameter of a local training model of the at least one second network element.

**13.** The method according to claim 11, wherein the second information further comprises:
model instance identifier information, used for performing model association by the second network element.

**14.** The method according to claim 1, wherein before the step of sending, by a first network element, a federated model training request message to at least one second network element when performing a federated model training process corresponding to a model training task, the method further comprises:
receiving, by the first network element, a model request message sent by a third network element, wherein the model request message comprises at least one of the following:

  type information of the model training task;
  identifier information of the model training task;
  related information of a second filter, used for limiting at least one of a target object, a target time, or a target area corresponding to the model training task; and
  model feedback related information, wherein the model feedback related information comprises at least one of a model feedback format or a feedback condition.

**15.** The method according to claim 14, wherein the method further comprises:

  sending, by the first network element, related information of the target model to the third network element when a calculation result of a loss function of the target model meets a predetermined requirement, wherein
  the related information of the target model comprises at least one of the following:

    model instance identifier information;
    target model information;
    second indication information, indicating that the target model is a vertical federated learning model; and
    related information of the second network element.

**16.** A model training method, wherein the method comprises:

  receiving, by a second network element, a federated model training request message sent by a first network element, wherein the federated model training request message is used for requesting the second network element to participate in a federated model training process corresponding to a model training task;
  performing, by the second network element, model training based on the federated model training request message to obtain first model training intermediate data; and
  sending, by the second network element, first information to the first network element, wherein the first information comprises at least the first model training intermediate data, wherein
  the first model training intermediate data corresponds to samples used for federated model training in the second network element, the samples used for the federated model training in the second network element and samples used for the federated model training in a fourth network element are the same but sample features are different, and the fourth network element is another network element than the second network element in a plurality of network elements participating in the federated model training process.

**17.** The method according to claim 16, wherein the federated model training request message comprises at least one of the following:

model instance identifier information;

type information of the model training task;

identifier information of the model training task;

first indication information, indicating that the federated model training process is one vertical federated learning process;

related information of a first filter, used for limiting at least one of a target object, a target time, or a target area corresponding to the model training task;

model training configuration information;

feedback information of model training data; and

related information of the fourth network element.

18. The method according to claim 17, wherein the model instance identifier information corresponds to at least one of the following:

related information of the first network element;

a first time, indicating that the model training task is performed based on training data generated in the first time;

a second time, indicating a completion time of the federated model training process; and

related information of the network elements participating in the federated model training process.

19. The method according to claim 17, wherein the model training configuration information comprises at least one of the following:

model structure information;

model hyperparameter information; and

type information of training data in the federated model training process.

20. The method according to claim 16 or 17, wherein the step of performing, by the second network element, model training based on the federated model training request message to obtain first model training intermediate data comprises:

performing, by the second network element, the model training based on the federated model training request message to obtain a local training model; and

generating, by the second network element, the first model training intermediate data through calculation according to the local training model.

21. The method according to claim 20, wherein the step of performing, by the second network element, the model training based on the federated model training request message to obtain a local training model comprises:

determining, by the second network element based on the first indication information, that the federated model training process needs to be performed;

determining, by the second network element based on the type information of the model training task or the identifier information of the model training task, the model training task corresponding to the federated model training process;

obtaining, by the second network element, first training data based on the model training task and the related information of the first filter; and

performing, by the second network element, the model training based on the model training configuration information and the first training data to obtain the local training model; and

the step of generating, by the second network element, the first model training intermediate data through calculation according to the local training model comprises:

calculating, by the second network element, second training data based on the local training model to obtain the first model training intermediate data corresponding to the second training data.

22. The method according to claim 16, wherein the first information further comprises at least one of the following:

model instance identifier information, used for performing model association by the first network element; and

sample identifier information of the samples corresponding to the first model training intermediate data in the second network element.

**23.** The method according to claim 16, wherein the second network element is a network element that is obtained by the first network element from a network repository function NRF based on the model training task and can support the federated model training process.

**24.** The method according to claim 16, wherein the method further comprises:

receiving, by the second network element, second information sent by the first network element, wherein the second information comprises at least second model training intermediate data; and
performing, by the second network element, local model training again based on the second model training intermediate data to reobtain the first model training intermediate data.

**25.** The method according to claim 24, wherein the second model training intermediate data comprises at least: a gradient of a loss function of a target model for a parameter of a local training model of the at least one second network element.

**26.** The method according to claim 24, wherein the second information further comprises:
model instance identifier information, used for performing model association by the second network element.

**27.** A model training method, wherein the method comprises:

receiving, by a third network element, related information of a target model sent by a first network element, wherein
the related information of the target model at least represents a vertical federated model of the target model.

**28.** The method according to claim 27, wherein the related information of the target model comprises at least one of the following:

model instance identifier information;
target model information;
second indication information, indicating that the target model is a vertical federated learning model; and
related information of a second network element, wherein the second network element is a network element participating in a federated model training process to obtain the target model.

**29.** The method according to claim 27, wherein the related information of the target model is sent by the first network element when a calculation result of a loss function of the target model meets a predetermined requirement.

**30.** The method according to claim 27, wherein before the step of receiving, by a third network element, related information of a target model sent by a first network element, the method further comprises:
sending, by the third network element, a model request message to the first network element, wherein the model request message comprises at least one of the following:

type information of a model training task;
identifier information of the model training task;
related information of a second filter, used for limiting at least one of a target object, a target time, or a target area corresponding to the model training task; and
model feedback related information, wherein the model feedback related information comprises at least one of a model feedback format or a feedback condition.

**31.** A model training apparatus, comprising:

a first sending module, configured to send a federated model training request message to at least one second network element when performing a federated model training process corresponding to a model training task, wherein the at least one second network element is a network element participating in the federated model training process;
a first receiving module, configured to receive first information sent by the at least one second network element, wherein the first information comprises at least first model training intermediate data, the first model training intermediate data corresponds to samples used for federated model training in the second network element, and the samples used for federated model training in the second network elements are the same but sample features are different; and
a first training module, configured to perform model training based on the first model training intermediate data reported by the at least one second network element to obtain a target model and/or second model training intermediate data.

32. A model training apparatus, wherein the apparatus comprises:

a second receiving module, configured to receive a federated model training request message sent by a first network element, wherein the federated model training request message is used for requesting a second network element to participate in a federated model training process corresponding to a model training task;
a second training module, configured to perform model training based on the federated model training request message to obtain first model training intermediate data; and
a second sending module, configured to send first information to the first network element, wherein the first information comprises at least the first model training intermediate data, wherein
the first model training intermediate data corresponds to samples used for federated model training in the second network element, the samples used for the federated model training in the second network element and samples used for the federated model training in a fourth network element are the same but sample features are different, and the fourth network element is another network element than the second network element in a plurality of network elements participating in the federated model training process.

33. A model training apparatus, wherein the apparatus comprises:

a third receiving module, configured to receive related information of a target model sent by a first network element, wherein
the related information of the target model at least represents a vertical federated model of the target model.

34. A communication device, comprising a processor and a memory, wherein the memory stores a program or instructions executable on the processor, and the program or instructions, when being executed by the processor, implement the steps of the model training method according to any one of claims 1 to 15, or implement the steps of the model training method according to any one of claims 16 to 26, or implement the steps of the model training method according to any one of claims 27 to 30.

35. A computer storage medium, wherein the computer storage medium stores a program or instructions, and the program or instructions, when being executed by a processor, implement the steps of the model training method according to any one of claims 1 to 15, or implement the steps of the model training method according to any one of claims 16 to 26, or implement the steps of the model training method according to any one of claims 27 to 30.

FIG. 1

FIG. 2

300

S310

A first network element sends a federated model training request message to at least one second network element when performing a federated model training process corresponding to a model training task

S320

The first network element receives first information sent by the at least one second network element

S330

The first network element performs model training based on first model training intermediate data reported by the at least one second network element to obtain a target model and/or second model training intermediate data

FIG. 3

400

S410

A first network element sends a federated model training request message to at least one second network element when performing a federated model training process corresponding to a model training task

S420

The first network element receives first information sent by the at least one second network element

S430

The first network element performs model training based on first model training intermediate data reported by the at least one second network element to obtain a target model and/or second model training intermediate data

FIG. 4

500

S510

A first network element receives a model request message sent by a third network element

S520

The first network element sends a federated model training request message to at least one second network element when performing a federated model training process corresponding to a model training task

S530

The first network element receives first information sent by the at least one second network element

S540

The first network element performs model training based on first model training intermediate data reported by the at least one second network element to obtain a target model and/or second model training intermediate data

FIG. 5

FIG. 6

700

S710

A second network element receives a federated model training request message sent by a first network element

S720

The second network element performs model training based on the federated model training request message to obtain first model training intermediate data

S730

The second network element sends first information to the first network element

FIG. 7

800

S810

A third network element receives related information of a target model sent by a first network element

FIG. 8

900

910 First sending module

920 First receiving module

930 First training module

FIG. 9

1000

1010 Second receiving module

1020 Second training module

1030 Second sending module

FIG. 10

1100

Third receiving module — 1110

FIG. 11

— 1200

Communication device

1201 — Processor ⟷ Memory — 1202

FIG. 12

1300

Radio frequency unit — 1301

Network module — 1302

Memory — 1309
Application program
Operating system

1310 — Processor

Audio output unit — 1303

1304
Input unit
Graphics processing unit — 13041
Microphone — 13042

Interface unit — 1308

1307
User input unit
Touch panel — 13071
Another input device — 13072

1306
Display unit — 13061
Display panel

Sensor — 1305

FIG. 13

FIG. 14

FIG. 15

<table>
<tr><td colspan="2" align="center">INTERNATIONAL SEARCH REPORT</td><td>International application No.<br>**PCT/CN2022/143132**</td></tr>
</table>

| A. | CLASSIFICATION OF SUBJECT MATTER |
|---|---|

H04L 12/00(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 联邦, 联合, 模型, 训练, 学习, 中间数据, 样本特征, federated, model, training, learning, middle, data, sample, characteristic

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113839797 A (HUAWEI TECHNOLOGIES CO., LTD.) 24 December 2021 (2021-12-24) description, paragraphs [0112]-[0189] | 1-35 |
| A | CN 111860829 A (POINTS TECHNOLOGY (BEIJING) CO., LTD.) 30 October 2020 (2020-10-30) entire document | 1-35 |
| A | CN 111768008 A (PING AN TECHNOLOGY (SHENZHEN) CO., LTD.) 13 October 2020 (2020-10-13) entire document | 1-35 |
| A | US 2021150269 A1 (INTERNATIONAL BUSINESS MACHINES CORP.) 20 May 2021 (2021-05-20) entire document | 1-35 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **14 February 2023** | **20 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/143132**

| Patent document cited in search report | | | Publication date (day/month/year) | Patent family member(s) | | | Publication date (day/month/year) |
|---|---|---|---|---|---|---|---|
| CN | 113839797 | A | 24 December 2021 | WO | 2021258986 | A1 | 30 December 2021 |
| CN | 111860829 | A | 30 October 2020 | None | | | |
| CN | 111768008 | A | 13 October 2020 | WO | 2021115480 | A1 | 17 June 2021 |
| US | 2021150269 | A1 | 20 May 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111670001